# EUROPEAN PATENT SPECIFICATION

(11) **EP 3 865 291 B1**
(45) Date of publication and mention of the grant of the patent: **25.12.2024**
(21) Application number: 21157601.2
(22) Date of filing: 17.02.2021
(51) Int. Cl.: B29D 30/00, B29D 30/06

(54) **MANUFACTURING METHOD OF TIRE INTEGRATED ELECTRONIC DEVICE AND TIRE**
VERFAHREN ZUR HERSTELLUNG EINER REIFENINTEGRIERTEN ELEKTRONISCHEN VORRICHTUNG UND LUFTREIFEN
PROCÉDÉ DE FABRICATION D'UN DISPOSITIF ÉLECTRONIQUE INTÉGRÉ DANS UN PNEU ET PNEU

(30) Priority: 17.02.2020 KR 20200019159
(43) Date of publication of application: 18.08.2021
(73) Proprietor: HANKOOK TIRE & TECHNOLOGY CO., LTD, Gyeonggi-do 13494 (KR)
(72) Inventor: SO, Soon Hong, 34119 Daejeon (KR); LEE, Kwang Yong, 30101 Sejong-si (KR)
(74) Representative: Stöckeler, Ferdinand

(56) References cited:
- EP-A2- 3 492 289
- WO-A1-2013/098712
- DE-A1- 102007 030 231
- US-A1- 2002 174 925

## Description

### BACKGROUND OF THE INVENTION

### Field of the Invention

The present invention relates to a manufacturing method of a tire integrated electronic device, and more specifically, a manufacturing method of a tire integrated electronic device by which the electronic device is inhibited from damaging a tire by being detached from a rubber mount. The invention also relates to a tire attached with an integrated electronic device.

### Description of the Related Art

Korean Patent Registration No. 0614520 discloses a method of directly attaching a tire attached sensor to a tire by using an epoxy-based adhesive which has viscosity at room temperature and is hardened at a temperature equal to or lower than 100°C. In the method, hardening of the adhesive takes at least several to 24 hours. Hence, it is inconvenient that the sensor is attached in an appropriate manner when a tire is released during a tire manufacturing process or attachment has to be completed in advance in a case of replacement of a tire. In addition, a sensor is directly exposed to the outside, and thus there is a high possibility that a sensor will be damaged when foreign matter is contained inside a tire.

United States Patent No. 6788192 discloses a method in which a tire sensor is attached to a side wall and is vulcanized during a molding process. Since the sensor is attached under an inner liner, it is not possible to replace the sensor. In addition, in a case of measuring pressure of a tire, there is a disadvantage that the sensor is covered with the inner liner and thus it is difficult to use a sensor such as a MEMS which detects air pressure in a hole of a pressure sensor.

United States Patent No. 8561659 discloses a method in which a foam strip is formed at a tire inner surface, that is, a surface of an inner liner, and a sensor is positioned inside the foam strip. Since the foam strip is flexible, acceleration information which is transmitted through a tire is not directly transmitted to the sensor. Hence, it is inconvenient that the acceleration information has to be compared with a value directly measured at a tire surface.

United States Patent Application No. 2009-0071249 discloses an embodiment in which an acceleration sensor is embedded inside a tire. In the embodiment, since the acceleration sensor is embedded inside the tire, there is no risk of detachment of the sensor due to movement of the tire; however, the sensor is contained in a tire structure as foreign matter and thus durability can be affected.

United States Patent No. 9016118 discloses a pocket structure into which a tire attached sensor is inserted. The pocket structure is formed by steps of forming a patch for forming a pocket on an inner liner through an adhesive attaching method, a molding method, or a vulcanization method and forming a mounting structure on the patch. In addition, a structure in which a hole is formed at a side of the mounting structure to improve transmission and reception sensitivity of radio waves and enhance liquid flow is employed. However, when the pocket and the mounting structure are separately formed, an interface therebetween is vulnerable to an external force, and thus there is a high possibility that the sensor can be detached during rotation of a tire.

United States Patent No. 9016339 discloses a method in which a fastener, to which a sensor can be coupled, is disposed and vulcanized to be fixed on a carcass at a tire inner surface, and then the sensor is coupled to the fastener. The sensor can be replaced by using the fastener, and adhesion is more increased by using a vulcanization method than using an adhesive. However, since a fastener has to be inserted before a vulcanization process, there is a disadvantage of adding a further manufacturing process, and there is another disadvantage that pressure can be ununiformly applied during vulcanization due to the fastener.

United States Patent Application No. 2006-0158340 discloses a method in which a patch is attached to a vulcanized tire and a sensor is inserted into the patch. The attachment of a patch is performed by attaching various rubber patches to a cured tire and fixing the patches by sewing or using an adhesive so as not to be detached. However, as the tire rotates, stress is applied in an unintegrated method, and a problem arises in that there is a high possibility that a patch can be detached when a level of stress increases.

United States Patent Application No. 2014-0144210 discloses a method in which fasteners are fitted inside a tire to couple sensors to the fasteners, and the sensors and upper and lower cases are coupled to and are fixed to the fitting structure. The method is advantageous in that a sensor can be strongly fixed and replacement thereof is possible; however, an inside of a tire is damaged in a process of fitting a fastener so as to fix the sensor, and thus there is a possibility that it is difficult to obtain sufficient durability suitable for long-time running.

WO 2013/098712 A1 describes a monitoring device for tires for vehicle wheels comprising: an electronic unit; a connecting member configured for constraining said electronic unit to a tire, said connecting member comprising: a first and a second base portion, mutually separated by a separated region, each of said base portions having a respective base surface associable with an inner surface of a tire; a housing portion associated with said base portions defining, in cooperation with said base portions, a cavity for housing said electronic unit, wherein said electronic unit comprises at least one sensor, at least one antenna and a holding body for housing at least said sensor and said antenna, wherein said electronic unit is inserted in said cavity.

DE 10 2007 0300231 A1 describes tire module for vehicle tires, wherein a bearing for cushioning mechanical stresses is arranged between the underside of an electronic module and the inside of the tire.

### Citation List

### Patent Literature

Patent Literature 0001: Korean Patent Registration

### SUMMARY OF THE INVENTION

An object of the invention to solve such problems is to provide a manufacturing method of a tire integrated electronic device by which the electronic device is inhibited from damaging a tire by being detached from a rubber mount.

Therefore, the invention provides a manufacturing method of a tire integrated electronic device according to claim 1 and a tire attached with an integrated electronic device according to claim 10.

Technical objects to be achieved by the invention are not limited to the technical object mentioned above, and the following description enables other unmentioned technical objects to be clearly understood by a person of ordinary skill in the art to which the invention belongs.

According to a configuration of the invention to achieve the object described above, there is provided a manufacturing method of a tire integrated electronic device, including: a) step of positioning an electronic device mockup portion inside a first mold unit and a second mold unit; b) step of performing injection molding or compression molding by injecting unvulcanized rubber inside the first mold unit and the second mold unit such that the unvulcanized rubber encloses the electronic device mockup portion; c) step of unmolding a rubber mount unit molded to enclose the electronic device mockup portion; d) step of inserting an electronic device unit into a lower end portion of the unmolded rubber mount unit; and e) step of attaching the electronic device unit-inserted rubber mount unit to an inner liner of a tire. The rubber mount unit is molded to have a bottom body and an insertion hole at a lower portion of the rubber mount unit in the bottom body of the rubber mount unit, through which the electronic device unit is to be inserted into the lower end portion of the rubber mount unit.

According to an embodiment of the invention, the a) step may include: a1) step of preparing the first mold unit and the second mold unit; a2) step of positioning the electronic device mockup portion at an inner center of the first mold unit and the second mold unit; and a3) step of closing the first mold unit and the second mold unit.

According to the embodiment of the invention, in the a2) step, the electronic device mockup portion may be provided to have an antenna portion located at a position corresponding to an antenna hole forming portion.

According to the embodiment of the invention, the b) step includes: b1) step of injecting the unvulcanized rubber inside the first mold unit and inside the second mold unit; and b2) step of maintaining a preset vulcanization temperature for a preset vulcanization time so as to induce a crosslinking reaction in the injected unvulcanized rubber.

According to the embodiment of the invention, in the b1) step, the unvulcanized rubber may fill insides of the first mold unit and the second mold unit to enclose the electronic device mockup portion, and the unvulcanized rubber may be provided to enclose the electronic device mockup portion except for the antenna hole forming portion located at an upper part of the electronic device mockup portion and a position corresponding to the insertion hole located at a lower part of the electronic device mockup portion.

According to the embodiment of the invention, in the b2) step, the vulcanization temperature may be set in a range of 120°C to 160°C, and the vulcanization time may be set in a range of one minute to 30 minutes.

According to the embodiment of the invention, in the c) step, the electronic device mockup portion is unmolded from the rubber mount unit.

According to the embodiment of the invention, in the d) step, the electronic device unit may be inserted into the rubber mount unit through the insertion hole.

According to the embodiment of the invention, the insertion hole may be formed to have a multi-step structure such that an air layer is formed between the electronic device unit and the inner liner without a surface-to-surface contact between a bottom surface of the electronic device unit and a surface of the inner liner.

According to the embodiment of the invention, the rubber mount unit may be formed to have a bottom having a thickness of 0.5 mm to 3.0 mm.

According to the embodiment of the invention, the insertion hole may be formed to have an area as large as 60% to 95% of a bottom area of the electronic device unit.

According to another configuration of the invention to achieve the object described above, there is provided an integrated electronic device that is manufactured in accordance with the manufacturing method of a tire integrated electronic device.

According to still another configuration of the invention to achieve the object described above, there is provided a tire attached with an integrated electronic device that is manufactured in accordance with the manufacturing method of a tire integrated electronic device.

### BRIEF DESCRIPTION OF THE DRAWINGS

FIG. 1 is a flowchart illustrating a manufacturing method of a tire integrated electronic device according to an embodiment of the invention;
FIG. 2 is a flowchart illustrating a step of positioning an electronic device mockup portion according to the embodiment of the invention;
FIG. 3 is a flowchart illustrating a step of performing injection molding or compression molding according to the embodiment of the invention;
FIG. 4 is a perspective view illustrating the tire integrated electronic device in a state where the electronic device mockup portion according to the embodiment of the invention is mounted;
FIG. 5 is a side view illustrating the tire integrated electronic device in the state where the electronic device mockup portion according to the embodiment of the invention is mounted;
FIG. 6 is a perspective view illustrating the tire integrated electronic device according to the embodiment of the invention;
FIG. 7 is a perspective view illustrating a state where a rubber mount unit according to the embodiment of the invention in a state of being vertically cut;
FIG. 8 illustrates a photograph of an actual rubber mount unit according to the embodiment of the invention in a state of being vertically cut;
FIG. 9 illustrates photographs of an integrated electronic device without having an insertion hole according to the embodiment of the invention, the photographs being taken before and after an evaluation is performed;
FIG. 10 illustrates photographs of the tire integrated electronic device according to the embodiment of the invention;
FIG. 11 is a side view illustrating a rubber mount unit attached with Velcro according to the embodiment of the invention; and
FIG. 12 is a photograph illustrating the Velcro according to the embodiment of the invention.

### DETAILED DESCRIPTION OF THE PREFERRED EMBODIMENTS

Hereinafter, the invention is to be described with reference to the accompanying drawings. However, the invention can be realized as various different examples, and thus is not limited to embodiments described here. Besides, a part irrelevant to the description is omitted from the drawings in order to clearly describe the invention, and similar reference signs are assigned to similar parts through the entire specification.

In the entire specification, a case where a certain part is "connected to (attached to, in contact with, or coupled to)" another part means not only a case where the parts are "directly connected" to each other, but also a case where the parts are "indirectly connected" to each other with another member interposed therebetween. In addition, a case where a certain part "comprises" a certain configurational element does not mean that another configurational element is excluded but means that the other configurational element can be further included, unless specifically described otherwise.

Terms used in this specification are only used to describe a specific embodiment and are not intentionally used to limit the invention thereto. A singular form of a word includes a plural meaning of the word, unless obviously implied otherwise in context. In this specification, words such as "to comprise" or "to have" are understood to specify that a feature, a number, a step, an operation, a configurational element, a member, or a combination thereof described in the specification is present and not to exclude presence or a possibility of addition of one or more other features, numbers, steps, operations, configurational elements, members, or combinations thereof in advance.

Hereinafter, embodiments of the invention will be described in detail with reference to the accompanying drawings.

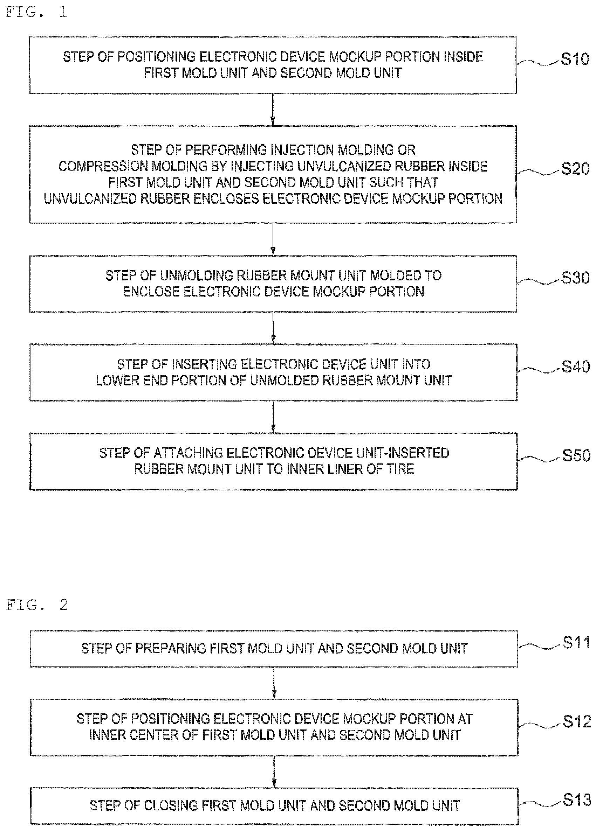

FIG. 1 is a flowchart illustrating a manufacturing method of a tire integrated electronic device according to an embodiment of the invention.

In the manufacturing method of a tire integrated electronic device, first, Step S10 of positioning an electronic device mockup portion inside a first mold unit and a second mold unit can be set to be fulfilled.

FIG. 2 is a flowchart illustrating a step of positioning the electronic device mockup portion according to the embodiment of the invention.

With further reference to FIG. 2, in Step S10 of positioning the electronic device mockup portion inside the first mold unit and the second mold unit, first, step S11 of preparing the first mold unit and the second mold unit can be fulfilled.

The first mold unit and the second mold unit can be provided in a state of being divided into two parts in an up-down direction or in a right-left direction.

More specifically, the first mold unit includes a first mold body and a mold inlet.

The first mold body can form a body of the first mold unit.

The mold inlet is provided on an inner side of the first mold body and can be provided to allow unvulcanized rubber to be injected into an inside of the mold through the mold inlet.

The second mold unit forms a lower part of the mold and includes a second mold body and a mold groove.

The second mold body can form a body of the second mold unit and can be coupled to a lower part of the first mold body.

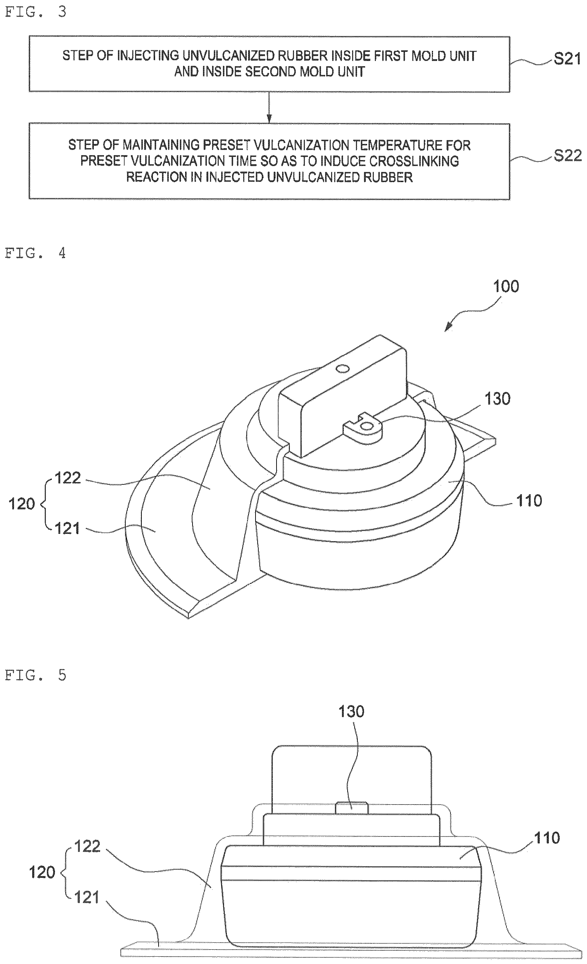

The mold groove is provided on an inner side of the second mold body and can be provided to accommodate the electronic device mockup portion 110 (refer to FIG. 4) inside.

The specific shape of the mold groove can be provided as a shape of a rubber mount unit 120 (refer to FIG. 4) which will be described.

After Step S11 of preparing the first mold unit and the second mold unit, Step S12 of positioning the electronic device mockup portion at an inner center of the first mold unit and the second mold unit can be fulfilled.

In Step S12 of positioning the electronic device mockup portion at the inner center of the first mold unit and the second mold unit, the electronic device mockup portion 110 can be provided to have an antenna portion located at a position corresponding to an antenna hole forming portion 130.

Specifically, a position of an antenna portion of an electronic device unit 140 can be marked on the electronic device mockup portion 110. The electronic device mockup portion 110 provided as described above can be provided to have the marked antenna portion located at a position corresponding to the antenna hole forming portion 130.

The antenna hole forming portion 130 enables the position corresponding to the antenna portion not to be enclosed by the unvulcanized rubber which encloses the electronic device unit 140 such that an antenna hole 123 can be formed in the rubber mount unit 120.

In addition, a guide portion can be attached to an upper part of the electronic device mockup portion 110, the guide portion being provided to guide so that the electronic device mockup portion 110 is temporarily located at a center of the mold groove and to conveniently install the electronic device mockup portion 110 after vulcanization.

After Step S12 of positioning the electronic device mockup portion at the inner center of the first mold unit and the second mold unit, Step S13 of closing the first mold unit and the second mold unit can be fulfilled.

After Step S10 of positioning the electronic device mockup portion inside the first mold unit and the second mold unit, Step S20 of performing injection molding or compression molding by injecting unvulcanized rubber inside the first mold unit and the second mold unit such that the unvulcanized rubber encloses the electronic device mockup portion can be fulfilled.

FIG. 3 is a flowchart illustrating the step of performing injection molding or compression molding according to the embodiment of the invention. FIG. 4 is a perspective view illustrating the tire integrated electronic device in a state where the electronic device mockup portion according to the embodiment of the invention is mounted.

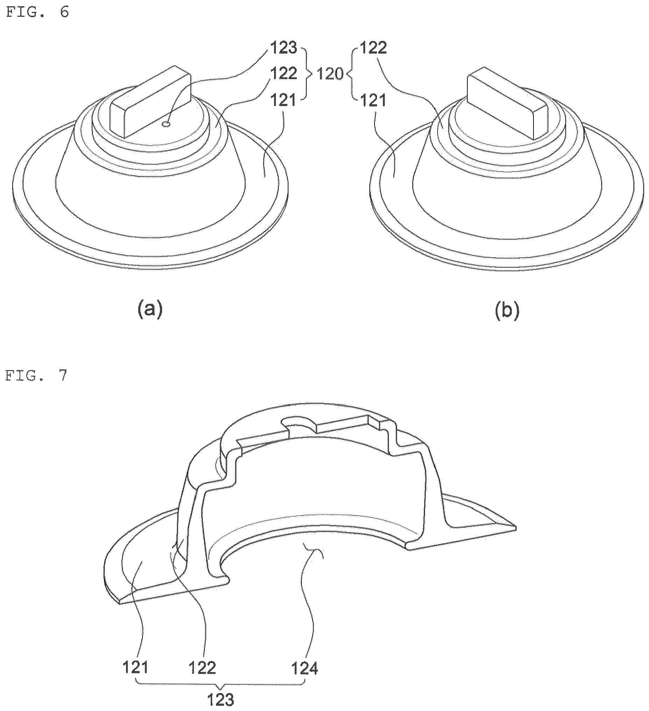

In addition, FIG. 5 is a side view illustrating the tire integrated electronic device in the state where the electronic device mockup portion according to the embodiment of the invention is mounted, and FIG. 6 is a perspective view illustrating the tire integrated electronic device according to the embodiment of the invention.

With further reference to FIGS. 3 to 6, in Step S20 of performing injection molding or compression molding by injecting the unvulcanized rubber inside the first mold unit and the second mold unit such that the unvulcanized rubber encloses the electronic device mockup portion, Step S21 of injecting the unvulcanized rubber inside the first mold unit and inside the second mold unit can be fulfilled.

In Step S21 of injecting the unvulcanized rubber inside the first mold unit and inside the second mold unit, the unvulcanized rubber can be injected through the mold inlet such that the unvulcanized rubber can fill an inside of the mold groove.

Here, the unvulcanized rubber can be made of any one of natural rubber, synthetic rubber, a mixture of natural rubber and synthetic rubber, or a polymer.

In Step S21 of injecting the unvulcanized rubber inside the first mold unit and inside the second mold unit, the unvulcanized rubber can fill insides of the first mold unit and the second mold unit to enclose the electronic device mockup portion 110, but can be provided to enclose the electronic device mockup portion 110 except for the antenna hole forming portion 130 located at an upper part of the electronic device mockup portion 110 and a position corresponding to an insertion hole 124 located at a lower part of the electronic device mockup portion 110.

In other words, the rubber mount unit 120 can be molded to have the insertion hole 124, through which the electronic device unit 140 is to be inserted, at a lower part of the rubber mount unit.

After Step S21 of injecting the unvulcanized rubber inside the first mold unit and inside the second mold unit, Step S22 of maintaining a preset vulcanization temperature for a preset vulcanization time so as to induce a crosslinking reaction in the injected unvulcanized rubber can be fulfilled.

In Step S22 of maintaining the preset vulcanization temperature for the preset vulcanization time so as to induce the crosslinking reaction in the injected unvulcanized rubber, the vulcanization temperature can be set in a range of 120°C to 160°C, and the vulcanization time can be set in a range of one minute to 30 minutes.

The vulcanization time can be set until the unvulcanized rubber is completely vulcanized.

In Step S22 of maintaining the preset vulcanization temperature for the preset vulcanization time so as to induce the crosslinking reaction in the injected unvulcanized rubber, the rubber mount unit 120 formed through vulcanization can be formed to include a bottom body 121, a side body 122, the antenna hole 123, and the insertion hole 124.

The bottom body 121 can be formed to enclose a lower part of the electronic device unit 140 except for a portion of the insertion hole 124, and the bottom body 121 can be molded to have an area which is equal to or larger than 110% of a bottom area of the electronic device unit 140.

The circular bottom body 121 is illustrated; however, the shape thereof is not limited thereto, and the bottom body can be formed into a polygonal shape.

The side body 122 can be formed to be extended upward from the bottom body 121 and can be formed to enclose a side surface of the electronic device unit 140.

The antenna hole 123 can be provided on an inner side of an upper part of the side body 122, and the antenna hole 123 enables an antenna and a pressure measuring portion of the electronic device unit 140 to be exposed to the outside such that sensing sensitivity is not degraded.

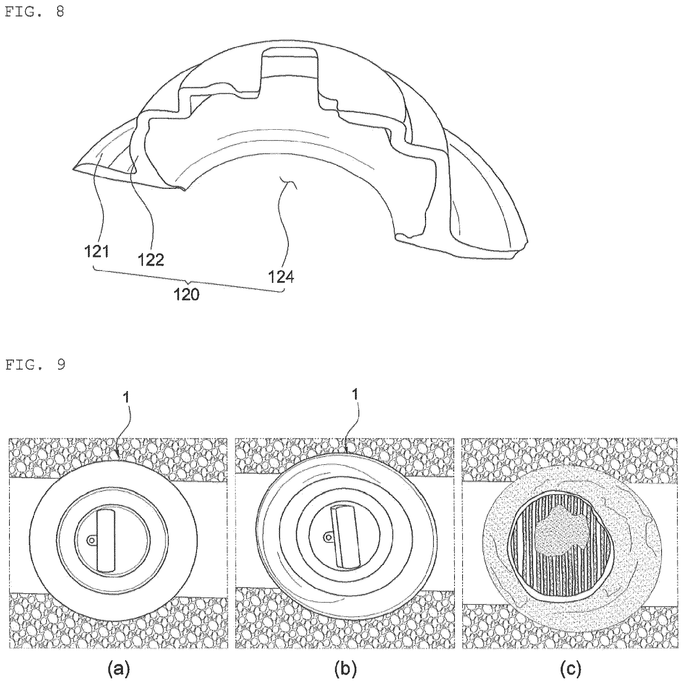

FIG. 7 is a perspective view illustrating the rubber mount unit according to the embodiment of the invention in a state of being vertically cut. FIG. 8 illustrates a photograph of an actual rubber mount unit according to the embodiment of the invention in a state of being vertically cut.

With further reference to FIGS. 7 and 8, the insertion hole 124 can be formed in the bottom body 121.

Specifically, the insertion hole 124 can be formed to have a multi-step structure such that an air layer is formed between the electronic device unit 140 and the inner liner without a surface-to-surface contact between a bottom surface of the electronic device unit 140 and a surface of the inner liner.

Specifically, when the electronic device unit 140 is in contact with the surface of the inner liner of the tire, the electronic device unit 140 is finely moved due to inertia and vibration during running of a vehicle. Here, when long-time running is performed, the surface of the inner liner is damaged due to friction caused from movement of the electronic device unit 140.

However, when a space is formed between the electronic device unit 140 and the inner liner by the insertion hole 124, the friction is not generated, and thus the surface of the inner liner is not to be damaged by the electronic device unit 140.

In particular, when the insertion hole 124 is formed between the surface of the inner liner and the electronic device unit 140 such that the air layer is formed therebetween, it is possible to achieve an effect that an impact transmitted from a tread is reduced by additionally passing through an air layer medium in addition to a solid medium between the tread and the inner liner.

Besides, the rubber mount unit 120 can be formed to have a bottom, that is, the bottom body 121 having a thickness of 0.5 mm to 3.0 mm.

When the bottom body 121 has a thickness of less than 0.5 mm, the electronic device unit 140 inserted into the insertion hole 124 and the surface of the inner liner can come into contact with each other due to vibration caused by running or the like, and thus the inner liner can be damaged.

In addition, when the bottom body 121 has a thickness of more than 3.0 mm or is too thick, a weight of a tire integrated electronic device 100 increases, an influence of inertia on the tire integrated electronic device increases, and thus the inner liner can be damaged.

Hence, it is desirable to limit the thickness of the bottom body 121 to 3.0 mm.

In addition, the insertion hole 124 can be formed to have an area as large as 60% to 95% of the bottom area of the electronic device unit 140 such that the above-described effects can be maximized.

In other words, the area of the bottom body 121 is to be equal to or larger than 110% of the bottom area of the electronic device unit 140, and the insertion hole 124 is to be formed to have the area as large as 60% to 95% of the bottom area such that the air layer for reducing an impact can be formed.

FIG. 9 illustrates photographs of an integrated electronic device without having the insertion hole according to the embodiment of the invention, the photographs being taken before and after an evaluation is performed.
(a) of FIG. 9 is a photograph illustrating a state where an electronic device 1 in the related art without having the insertion hole 124 is attached to an inner liner.

As illustrated in (b) of FIG. 9, when the electronic device 1 in the related art is evaluated after running, it is possible to see that one side of a rubber mount portion is pushed and swollen.

In addition, as illustrated in (c) of FIG. 9, when a surface of the inner liner is checked after the electronic device 1 in the related art is removed, it is possible to see that the inner liner is damaged to the extent that a carcass cord can be seen.

As described above, since the electronic device 1 in the related art does not have the insertion hole 124 formed at a lower part of the electronic device unit 140, the impact is not cushioned, and thus a problem arises in that the inner liner is damaged due to vibration.

However, according to the invention, since the insertion hole 124 is formed to form the air layer between the inner liner and the electronic device unit 140, the impact is cushioned, and thus it is possible to inhibit the inner liner from being damaged.

In addition, according to the invention, since the insertion hole 124 inhibits heat of the inner liner from being directly transmitted to the electronic device unit 140, and the air layer further increases a heat insulation effect, an effect of improving heat resistance of the electronic device unit 140 is achieved.

After Step S20 of performing injection molding or compression molding by injecting the unvulcanized rubber inside the first mold unit and the second mold unit such that the unvulcanized rubber encloses the electronic device mockup portion, Step S30 of unmolding the rubber mount unit molded to enclose the electronic device mockup portion can be fulfilled.

In Step S30 of unmolding the rubber mount unit molded to enclose the electronic device mockup portion, the electronic device mockup portion 110 can be unmolded from the rubber mount unit 120.

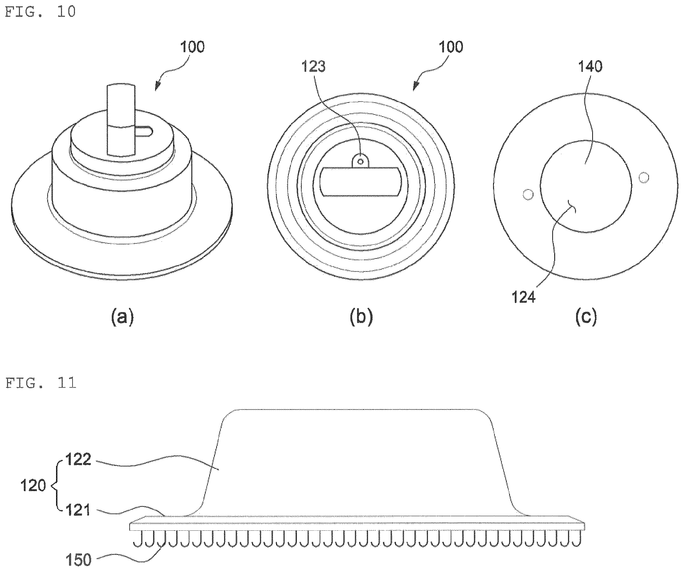

FIG. 10 is a photograph illustrating the tire integrated electronic device according to the embodiment of the invention.

With reference to FIG. 10, after Step S30 of unmolding the rubber mount unit molded to enclose the electronic device mockup portion, Step S40 of inserting the electronic device unit into a lower end portion of the unmolded rubber mount unit can be fulfilled.

In Step S40 of inserting the electronic device unit into the lower end portion of the unmolded rubber mount unit, the electronic device unit 140 can be inserted into the rubber mount unit 120 through the insertion hole 124.

After Step S40 of inserting the electronic device unit into the lower end portion of the unmolded rubber mount unit, Step S50 of attaching the electronic device unit-inserted rubber mount unit to the inner liner of the tire can be fulfilled.

In Step S50 of attaching the electronic device unit-inserted rubber mount unit to the inner liner of the tire, the rubber mount unit 120 can be attached to the inner liner by an adhesive or glue.

Examples of the adhesive can include an instant adhesive, a silicone adhesive series, or a glue which exhibit 50% attachment strength within 10 minutes after attachment.

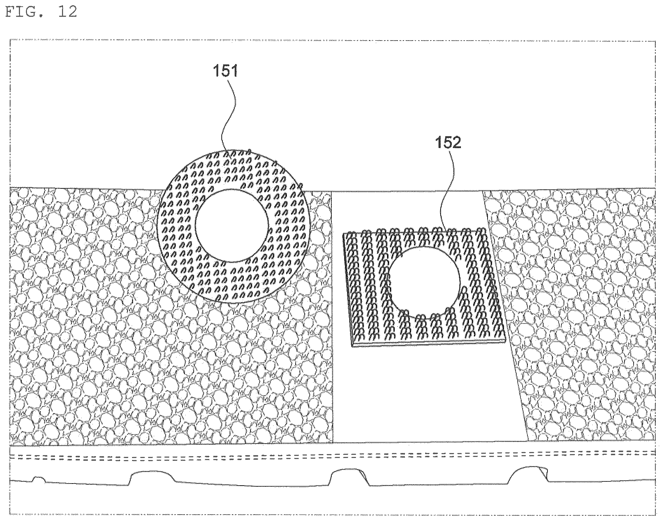

FIG. 11 is a side view illustrating a rubber mount unit attached with Velcro according to the embodiment of the invention. FIG. 12 is a photograph illustrating the Velcro according to the embodiment of the invention.

With reference to FIGS. 11 and 12, in Step S50 of attaching the electronic device unit-inserted rubber mount unit to the inner liner of the tire, the rubber mount unit 120 can be attached to the inner liner by the Velcro.

Specifically, in Step S50 of attaching the electronic device unit-inserted rubber mount unit to the inner liner of the tire, first, first Velcro 151 can be provided to be coupled to a lower part of the rubber mount unit 120. Then, second Velcro 152 which can be attached to the first Velcro 151 of the rubber mount unit 120 can be coupled to an inner side of the inner liner.

Next, the rubber mount unit 120 can be attached to the inner liner by using the first Velcro 151 and the second Velcro 152.

On the other hand, the rubber mount unit 120 can be fastened to the inner liner by using a hook.

The invention provided as described above can avoid the problem of causing the inner liner to be damaged by the electronic device unit 140 since the electronic device unit 140 is attached in a state of being separated from the surface of the inner liner and the insertion hole 124 is formed such that the air layer is formed between the inner liner and the electronic device unit 140.

In addition, it is possible to avoid a problem of causing the electronic device unit 140 to be detached from the rubber mount unit 120 and damage a tire.

In addition, since the electronic device unit 140 is integrated with the rubber mount unit 120, it is possible to perform history management by tracking a tire, as long as the rubber mount unit 120 is not detached from the inner liner by artificial means after primary attachment.

In addition, it is possible to avoid a problem of detachment of the electronic device unit 140 due to incorrect installation of the electronic device unit 140.

In addition, since the electronic device unit 140 measures acceleration, and the acceleration has directionality, it is difficult to transmit an accurate value, when a direction of the electronic device unit 140 is incorrect. However, when the electronic device unit 140 is integrated with the rubber mount unit 120, it is possible to avoid a problem of incorrect measurement of information such as acceleration due to a change in direction of the electronic device unit 140.

The invention according to the configuration described above has the following effects. Since the electronic device unit is attached in a state of being separated from the surface of the inner liner and the insertion hole is formed such that air layer is formed between the inner liner and the electronic device unit, it is possible to avoid a problem of causing the electronic device unit to damage the inner liner.

It is possible to avoid a problem of causing the electronic device unit to be detached from the rubber mount unit and damage a tire.

In addition, since the electronic device unit is integrated with the rubber mount unit, it is possible to perform history management by tracking a tire, as long as the rubber mount unit is not detached by artificial means after primary attachment.

In addition, it is possible to avoid a problem of detachment of an electronic device unit due to incorrect installation of the electronic device unit.

In addition, since the electronic device unit measures acceleration, and the acceleration has directionality, it is difficult to transmit an accurate value, when a direction is incorrect. However, when the electronic device unit is integrated with the rubber mount unit, it is possible to avoid a problem of incorrect measurement due to a change in direction of the electronic device unit.

In addition, it is possible to perform molding regardless of a shape of an electronic device.

Effects of the invention are construed not to be limited to the above-mentioned effects but to include every effect that can be derived from configurations of the invention described in the detailed description of the preferred embodiments and claims of the invention.

The description of the invention described above is provided as an example, and a person of ordinary skill in the art to which the invention belongs can understand that it is possible to easily modify the invention to another embodiment without changing the technical idea or essential feature of the invention. Therefore, the embodiments described above are provided to be understood as exemplified examples in every aspect and not as examples limiting the invention. For example, the configurational elements described in singular forms can be realized in a distributed manner. Similarly, the configurational elements described in a distributed manner can be realized in a combined manner.

## Claims

1. A manufacturing method of a tire integrated electronic device, comprising:
a) step (S10) of positioning an electronic device mockup portion (110) inside a first mold unit and a second mold unit;
b) step (S20) of performing injection molding or compression molding by injecting unvulcanized rubber inside the first mold unit and the second mold unit such that the unvulcanized rubber encloses the electronic device mockup portion (110);
c) step (S30) of unmolding a rubber mount unit (120) molded to enclose the electronic device mockup portion (110);
d) step (S40) of inserting an electronic device unit (140) into a lower end portion of the unmolded rubber mount unit (120); and
e) step (S50) of attaching the electronic device unit-inserted rubber mount unit to an inner liner of a tire,
wherein the rubber mount unit (120) is molded to have a bottom body (121) and an insertion hole (124) at a lower portion of the rubber mount unit (120) in the bottom body (121) of the rubber mount unit (120), through which the electronic device unit (140) is to be inserted into the lower end portion of the rubber mount unit (120);
wherein the b) step (S20) includes:
b1) step (S21) of injecting the unvulcanized rubber inside the first mold unit and inside the second mold unit; and
b2) step (S22) of maintaining a preset vulcanization temperature for a preset vulcanization time so as to induce a crosslinking reaction in the injected unvulcanized rubber;
wherein, in the c) (S30) step, the electronic device mockup portion (110) is unmolded from the rubber mount unit (120) .

2. The manufacturing method of a tire integrated electronic device according to claim 1,
wherein a) (S10) includes:
a1) step (S11) of preparing the first mold unit and the second mold unit;
a2) step (S12) of positioning the electronic device mockup portion at an inner center of the first mold unit and the second mold unit; and
a3) step (S13) of closing the first mold unit and the second mold unit.

3. The manufacturing method of a tire integrated electronic device according to claim 2,
wherein, in the a2) step, the electronic device mockup portion (110) is provided to have an antenna portion located at a position corresponding to an antenna hole forming portion.

4. The manufacturing method of a tire integrated electronic device according to claim 1,
wherein, in the b1) step (S21),
the unvulcanized rubber fills insides of the first mold unit and the second mold unit to enclose the electronic device mockup portion (110), and
the unvulcanized rubber is provided to enclose the electronic device mockup portion (110) except for the antenna hole forming portion located at an upper part of the electronic device mockup portion (110) and a position corresponding to the insertion hole (124) located at a lower part of the electronic device mockup portion (110).

5. The manufacturing method of a tire integrated electronic device according to claim 1 or 4,
wherein, in the b2) step (S22), the vulcanization temperature is set in a range of 120°C to 160°C, and the vulcanization time is set in a range of one minute to 30 minutes.

6. The manufacturing method of a tire integrated electronic device according to one of claims 1 to 5,
wherein, in the d) (S40) step, the electronic device unit (140) is inserted into the rubber mount unit through the insertion hole (124).

7. The manufacturing method of a tire integrated electronic device according to one of claims 1 to 6,
wherein the insertion hole (124) is formed to have a multi-step structure such that an air layer is formed between the electronic device unit and the inner liner without a surface-to-surface contact between a bottom surface of the electronic device unit (140) and a surface of the inner liner.

8. The manufacturing method of a tire integrated electronic device according to claim 7,
wherein the rubber mount unit is formed to have a bottom having a thickness of 0.5 mm to 3.0 mm.

9. The manufacturing method of a tire integrated electronic device according to claim 7 or 8,
wherein the insertion hole (124) is formed to have an area as large as 60% to 95% of a bottom area of the electronic device unit (140).

10. A tire attached with an integrated electronic device that is manufactured in accordance with the manufacturing method of a tire integrated electronic device according to one of claims 7 to 9.

## Patentansprüche

1. Ein Herstellungsverfahren für eine in einen Reifen integrierte elektronische Vorrichtung, das folgende Schritte aufweist:
a) einen Schritt (S10) eines Positionierens eines Elektronische-Vorrichtung-Dummy-Abschnitts (110) innerhalb einer ersten Formeinheit und einer zweiten Formeinheit;
b) einen Schritt (S20) eines Durchführens eines Spritzgusses oder einer Formpressung durch Einspritzen von unvulkanisiertem Gummi in die erste Formeinheit und die zweite Formeinheit, so dass der unvulkanisierte Gummi den Elektronische-Vorrichtung-Dummy-Abschnitt (110) umschließt;
c) einen Schritt (S30) eines Entformens einer Gummihalterungseinheit (120), die dahingehend geformt ist, den Elektronische-Vorrichtung-Dummy-Abschnitt (110) zu umschließen;
d) einen Schritt (S40) eines Einsetzens einer Elektronische-Vorrichtung-Einheit (140) in einen unteren Endabschnitt der entformten Gummihalterungseinheit (120); und
e) einen Schritt (S50) eines Anbringens der in die Elektronische-Vorrichtung-Einheit eingesetzten Gummihalterungseinheit an einer Innenauskleidung eines Reifens,
wobei die Gummihalterungseinheit (120) dahingehend geformt ist, einen Bodenkörper (121) und ein Einsetzloch (124) an einem unteren Abschnitt der Gummihalterungseinheit (120) in dem Bodenkörper (121) der Gummihalterungseinheit (120) aufzuweisen, durch das die Elektronische-Vorrichtung-Einheit (140) in den unteren Endabschnitt der Gummihalterungseinheit (120) einzusetzen ist;
wobei der b) Schritt (S20) Folgendes umfasst:
b1) einen Schritt (S21) eines Einspritzens des unvulkanisierten Gummis in die erste Formeinheit und in die zweite Formeinheit; und
b2) einen Schritt (S22) eines Aufrechterhaltens einer voreingestellten Vulkanisationstemperatur für eine voreingestellte Vulkanisationszeit, um eine Vernetzungsreaktion in dem eingespritzten unvulkanisierten Gummi zu induzieren;
wobei in dem c) Schritt (S30) der Elektronische-Vorrichtung-Dummy-Abschnitt (110) von der Gummihalterungseinheit (120) entformt wird.

2. Das Herstellungsverfahren für eine in einen Reifen integrierte elektronische Vorrichtung gemäß Anspruch 1,
wobei a) (S10) Folgendes umfasst:
a1) einen Schritt (S11) eines Vorbereitens der ersten Formeinheit und der zweiten Formeinheit;
a2) einen Schritt (S12) eines Positionierens des Elektronische-Vorrichtung-Dummy-Abschnitts an einer inneren Mitte der ersten Formeinheit und der zweiten Formeinheit; und
a3) einen Schritt (S13) eines Schließens der ersten Formeinheit und der zweiten Formeinheit.

3. Das Herstellungsverfahren für eine in einen Reifen integrierte elektronische Vorrichtung gemäß Anspruch 2,
wobei in dem a2) Schritt der Elektronische-Vorrichtung-Dummy-Abschnitt (110) dahingehend bereitgestellt wird, einen Antennenabschnitt aufzuweisen, der sich an einer Position befindet, die einem Antennenlochausbildungsabschnitt entspricht.

4. Das Herstellungsverfahren für eine in einen Reifen integrierte elektronische Vorrichtung gemäß Anspruch 1,
wobei in dem b1) Schritt (S21)
der unvulkanisierte Gummi Innenseiten der ersten Formeinheit und der zweiten Formeinheit füllt, um den Elektronische-Vorrichtung-Dummy-Abschnitt (110) zu umschließen, und
der unvulkanisierte Gummi dahingehend bereitgestellt wird, den Elektronische-Vorrichtung-Dummy-Abschnitt (110) mit Ausnahme des Antennenlochausbildungsabschnitts, der sich an einem oberen Teil des Elektronische-Vorrichtung-Dummy-Abschnitts (110) befindet, und einer Position, die dem Einsetzloch (124) entspricht, das sich an einem unteren Teil des Elektronische-Vorrichtung-Dummy-Abschnitts (110) befindet, zu umschließen.

5. Das Herstellungsverfahren für eine in einen Reifen integrierte elektronische Vorrichtung gemäß Anspruch 1 oder 4,
wobei in dem b2) Schritt (S22) die Vulkanisationstemperatur in einem Bereich von 120 °C bis 160 °C eingestellt wird und die Vulkanisationszeit in einem Bereich von einer Minute bis 30 Minuten eingestellt wird.

6. Das Herstellungsverfahren für eine in einen Reifen integrierte elektronische Vorrichtung gemäß einem der Ansprüche 1 bis 5,
wobei in dem d) (S40) Schritt die Elektronische-Vorrichtung-Einheit (140) durch das Einsetzloch (124) in die Gummihalterungseinheit eingesetzt wird.

7. Das Herstellungsverfahren für eine in einen Reifen integrierte elektronische Vorrichtung gemäß einem der Ansprüche 1 bis 6,
wobei das Einsetzloch (124) dahingehend ausgebildet ist, eine mehrstufige Struktur derart aufzuweisen, dass eine Luftschicht zwischen der Elektronische-Vorrichtung-Einheit und der Innenauskleidung ohne einen Oberfläche-zu-Oberfläche-Kontakt zwischen einer Bodenfläche der Elektronische-Vorrichtung-Einheit (140) und einer Oberfläche der Innenauskleidung ausgebildet wird.

8. Das Herstellungsverfahren für eine in einen Reifen integrierte elektronische Vorrichtung gemäß Anspruch 7,
wobei die Gummihalterungseinheit dahingehend ausgebildet ist, einen Boden mit einer Dicke von 0,5 mm bis 3,0 mm aufzuweisen.

9. Das Herstellungsverfahren für eine in einen Reifen integrierte elektronische Vorrichtung gemäß Anspruch 7 oder 8,
wobei das Einsetzloch (124) dahingehend ausgebildet ist, eine Fläche aufzuweisen, die so groß wie 60 % bis 95 % einer Bodenfläche der Elektronische-Vorrichtung-Einheit (140) ist.

10. Ein Reifen, an dem eine integrierte elektronische Vorrichtung angebracht ist, die gemäß dem Herstellungsverfahren für eine in einen Reifen integrierte elektronische Vorrichtung gemäß einem der Ansprüche 7 bis 9 hergestellt ist.

## Revendications

1. Procédé de fabrication d'un dispositif électronique intégré dans un pneu, comprenant:
a) une étape (S10) consistant à positionner une partie de maquette du dispositif électronique (110) à l'intérieur d'une première unité de moule et d'une deuxième unité de moule;
b) une étape (S20) consistant à effectuer un moulage par injection ou un moulage par compression en injectant du caoutchouc non vulcanisé à l'intérieur de la première unité de moule et de la deuxième unité de moule de sorte que le caoutchouc non vulcanisé enveloppe la partie de maquette du dispositif électronique (110);
c) une étape (S30) consistant à démouler une unité de montage de caoutchouc (120) moulé pour envelopper la partie de maquette du dispositif électronique (110);
d) une étape (S40) consistant à insérer une unité du dispositif électronique (140) dans une partie d'extrémité inférieure de l'unité de montage de caoutchouc non moulé (120); et
e) une étape (S50) consistant à fixer l'unité du dispositif électronique - unité de montage de caoutchouc insérée à une doublure intérieure d'un pneu,
dans lequel l'unité de montage de caoutchouc (120) est moulée de manière à présenter un corps inférieur (121) et un trou d'insertion (124) au niveau d'une partie inférieure de l'unité de montage de caoutchouc (120) dans le corps inférieur (121) de l'unité de montage de caoutchouc (120), à travers lequel l'unité du dispositif électronique (140) doit être insérée dans la partie d'extrémité inférieure de l'unité de montage de caoutchouc (120);
dans lequel l'étape b) (S20) comprend:
b1) une étape (S21) consistant à injecter le caoutchouc non vulcanisé à l'intérieur de la première unité de moule et à l'intérieur de la deuxième unité de moule; et
b2) une étape (S22) consistant à maintenir une température de vulcanisation préétablie pendant une durée de vulcanisation préétablie de manière à induire une réaction de réticulation dans le caoutchouc non vulcanisé injecté;
dans lequel, à l'étape c) (S30), la partie de maquette du dispositif électronique (110) est démoulée de l'unité de montage de caoutchouc (120).

2. Procédé de fabrication d'un dispositif électronique intégré dans un pneu selon la revendication 1,
dans lequel a) (S10) comporte:
a1) une étape (S11) consistant à préparer la première unité de moule et de la deuxième unité de moule;
a2) une étape (S12) consistant à positionner la partie de maquette du dispositif électronique au niveau d'un centre intérieur de la première unité de moule et de la deuxième unité de moule; et
a3) une étape (S13) consistant à fermer la première unité de moule et la deuxième unité de moule.

3. Procédé de fabrication d'un dispositif électronique intégré dans un pneu selon la revendication 2,
dans lequel, à l'étape a2), la partie de maquette du dispositif électronique (110) est prévue de manière à présenter une partie d'antenne située à une position correspondant à une partie de formation de trou d'antenne.

4. Procédé de fabrication d'un dispositif électronique intégré dans un pneu selon la revendication 1,
dans lequel, à l'étape b1) (S21),
le caoutchouc non vulcanisé remplit les intérieurs de la première unité de moule et de la deuxième unité de moule pour envelopper la partie de maquette du dispositif électronique (110), et
le caoutchouc non vulcanisé est prévu de manière à envelopper la partie de maquette du dispositif électronique (110), excepté la partie de formation de trou d'antenne située dans une partie supérieure de la partie de maquette du dispositif électronique (110), et à une position correspondant au trou d'insertion (124) situé dans une partie inférieure de la partie de maquette du dispositif électronique (110).

5. Procédé de fabrication d'un dispositif électronique intégré dans un pneu selon la revendication 1 ou 4,
dans lequel, à l'étape b2) (S22), la température de vulcanisation est réglée dans une plage de 120°C à 160°C, et le temps de vulcanisation est réglé dans une plage d'une minute à 30 minutes.

6. Procédé de fabrication d'un dispositif électronique intégré dans un pneu selon l'une des revendications 1 à 5,
dans lequel, à l'étape d) (S40), l'unité du dispositif électronique (140) est insérée dans l'unité de support de caoutchouc à travers le trou d'insertion (124).

7. Procédé de fabrication d'un dispositif électronique intégré dans un pneu selon l'une des revendications 1 à 6,
dans lequel le trou d'insertion (124) est formé de manière à présenter une structure à étages multiples de sorte qu'une couche d'air soit formée entre l'unité du dispositif électronique et la doublure intérieure sans contact de surface à surface entre une surface inférieure de l'unité du dispositif électronique (140) et une surface de la doublure intérieure.

8. Procédé de fabrication d'un dispositif électronique intégré dans un pneu selon la revendication 7,
dans lequel l'unité de montage de caoutchouc est formée de manière à présenter un fond présentant une épaisseur de 0,5 mm à 3,0 mm.

9. Procédé de fabrication d'un dispositif électronique intégré dans un pneu selon la revendication 7 ou 8,
dans lequel le trou d'insertion (124) est formé de manière à présenter une surface aussi grande que de 60% à 95% d'une surface inférieure de l'unité du dispositif électronique (140).

10. Pneu fixé avec un dispositif électronique intégré qui est fabriqué selon le procédé de fabrication d'un dispositif électronique intégré dans un pneu selon l'une des revendications 7 à 9.
